# EUROPÄISCHE PATENTSCHRIFT

(11) **EP 1 625 071 B1**
(45) Veröffentlichungstag und Bekanntmachung des Hinweises auf die Patenterteilung: **01.05.2013**
(21) Anmeldenummer: 04732316.7
(22) Anmeldetag: 12.05.2004
(51) Int. Cl.: B63H 21/17, H02K 55/02

(54) **SCHIFFSANTRIEB MIT KÜHLEINRICHTUNGEN FÜR STATOR UND ROTOR SEINER SYNCHRONMASCHINE**
SHIP PROPULSION SYSTEM COMPRISING COOLING DEVICES FOR THE STATOR AND ROTOR OF THE SYNCHRONOUS MACHINE THEREOF
SYSTEME DE PROPULSION DE NAVIRE COMPRENANT DES DISPOSITIFS DE REFROIDISSEMENT POUR LE ROTOR ET LE STATOR DE SA MACHINE SYNCHRONE

(30) Priorität: 16.05.2003 DE 10322275
(43) Veröffentlichungstag der Anmeldung: 15.02.2006
(73) Patentinhaber: Siemens Aktiengesellschaft, 80333 München (DE)
(72) Erfinder: HUBER, Norbert, 91056 Erlangen (DE); RIEGER, Jürgen, 91058 Erlangen (DE); SCHMIDT, Wolfgang, 91056 Erlangen (DE); WACKER, Bernd, 91074 Herzogenaurach (DE); FRAUENHOFER, Joachim, 90482 Nürnberg (DE); RZADKI, Wolfgang, 21509 Glinde (DE)
(86) Internationale Anmeldenummer: PCT/EP2004/005101
(87) Internationale Veröffentlichungsnummer: WO 2004/101356

(56) Entgegenhaltungen:
- EP-A- 1 010 614
- EP-A- 1 251 624
- WO-A-99/36312
- WO-A-03/019759
- US-A1- 2001 035 692
- US-B1- 6 485 339

## Beschreibung

Die Erfindung bezieht sich auf einen Schiffsantrieb mit einer Synchronmaschine, welche
a) einen Rotor mit einer tiefzukühlenden, insbesondere supraleitenden mehrpoligen Rotorwicklung, die thermisch direkt oder indirekt an eine Rotorkühleinrichtung angekoppelt ist,
   sowie
b) einen den Rotor umschließenden Stator mit
   - einer zu kühlenden, normalleitenden Statorwicklung,
   - einer die Statorwicklung zumindest teilweise aufnehmenden Trägerstruktur, welche einen im Wesentlichen hohlzylindrischen Außenkörper aus weichmagnetischem Material aufweist,
   - einem Außengehäuse mit einem den Außenkörper umschließenden, hohlzylindrischen Gehäuseteil
      und
   - einer Statorkühleinrichtung zur Abführung der von der Statorwicklung erzeugten Wärme an Wasser als ein Kühlmedium
enthält, wobei eine Kühlung des Gehäuseteils wenigstens in Teilbereichen durch Wärmeaustausch mit dem Kühlmedium in oder an dem Gehäuseteil vorgesehen ist.

Ein entsprechender Schiffsantrieb mit Synchronmaschine ist der WO 03/019759 A2 zu entnehmen.

Die Synchronmaschine des bekannten Schiffsantriebs enthält einen Rotor mit einer mehrpoligen Rotorwicklung, die aus Leitern mit Hoch-T_{c}-Supraleitermaterial ausgebildet ist. Die Wicklung befindet sich dabei in einem ein kryogenes Kühlmittel aufnehmenden, vakuumisolierten Kryostaten, wo sie auf einer Betriebstemperatur zwischen 15K und 77K zu halten ist. Die Statorwicklung einer Synchronmaschine kann nach US20010035692A1 als eine sogenannte Luftspaltwicklung zwischen nicht-magnetischen Tragzähnen ausgebildet sein. Um eine effektive Kühlung der Wicklungsteile zu gewährleisten, können nach EP1251624A2 radial, axial und/oder in Umlaufsrichtung verlaufende Kühlkanäle vorgesehen sein, die von Kühlwasser als Kühlmedium durchströmt sind. Für eine hinreichend effektive Kühlung der Statorwicklung der bekannten Maschine bedarf es zur Aufnahme dieser Kanäle bzw. zur Bereitstellung eines hinreichend großen Kühlmittelquerschnitts einer verhältnismäßig großen Ausdehnung der Tragzähne in radialer Richtung.

Bei manchen Maschinentypen ist jedoch diese radiale Ausdehnung beschränkt. Bei entsprechenden Maschinentypen mit verhältnismäßig kleinen Außendurchmessern ist dann eine effektive Abführung der von der Statorwicklung erzeugten Wärme an ein flüssiges Kühlmittel mittels einer derartigen Statorkühleinrichtung kaum möglich. Entsprechende Maschinentypen werden insbesondere für Propeller- und Jetantriebe in schwimmenden Geräten wie Schiffen gefordert.

In US6485339 ist eine Antriebsmaschine für einen Schiffsantrieb offenbart, die eine Kühlvorrichtung für den Antriebsmotor aufweist. Es sind Kühlkörper beschrieben, die die erzeugte Wärme an das umgebende Wasser weiterleiten. Dazu ist das Motorgehäuse aus einem besonders wärmeleitfähigen Material ausgeführt. Die Kühlung der Statorwicklung erfolgt hier über eine Abfuhr der Wärme über die wicklungsköpfe an den umgebenden Gehäuseteil.

Gute See-Eigenschaften eines Marine-Überwasserschiffes sind durch hohe Geschwindigkeit und gute Manövrierfähigkeit gekennzeichnet. Hohe Dauermarschgeschwindigkeit für große Beweglichkeit über weite Seeräume sind notwendig. Große Höchstgeschwindigkeiten und Beweglichkeit sind - manchmal nur für kurze Zeit - gefordert. Die Dauermarschgeschwindigkeit liegt um den Bereich von 20 Knoten und die Höchstgeschwindigkeit soll über 30 Knoten betragen.

Eine wichtige Eigenschaft ist die Seeausdauer, die sowohl vom Vorrat an Kraftstoff sowie Wasser und Proviant als auch von der Betriebssicherheit der Anlagen und der Einsatzfähigkeit der Besatzung abhängt. Heute ist die hohe Dauergeschwindigkeit bei Seegang verbunden mit guten Seeverhalten eine wichtige Forderung zur Überbrückung weiter Seeräume geworden. Die Schiffe müssen weltweit einsatzbereit sein.

Die Systeme und Komponenten der Fahr- und Bordnetze müssen zur Verbesserung der See-Eigenschaften eine hohe funktionelle Verfügbarkeit bieten. Die Konzeption muss so aufgebaut werden, dass im Falle eines, durch welche Umstände auch immer hervorgerufenen Schadens, die Beschädigung der Komponenten und deren Vernetzung durch entsprechenden Sensorik erkannt und beschädigte Systeme vom Fahr- und Bordnetz getrennt werden, so dass das intakte Netz möglichst unterbrechungsfrei weiterarbeiten kann.

Nachfolgend sei auf einige für die Auslegung des Antriebs eines Schiffes zu berücksichtigende Gesichtspunkte eingegangen:

### I. Propeller-Antrieb

Überwasser-Schiffe werden in der Regel heute mit Propellerschrauben angetrieben. Im Schiffsinneren sind Dieselmotoren oder Gasturbinen angeordnet, die ihre mechanische Energie über Wellenanlagen/Getriebe an die Propeller weitergeben. Für Marineantriebe werden aus den bisherigen Betriebserfahrungen besonders strenge Forderungen gestellt, nämlich
- schnelle Startbereitschaft,
- hohe Kurzhöchstleitungen bei Überlast,
- geringes Gewicht,
- gute Wartungsmöglichkeiten sowie Ein- und Ausbauwege,
- geringer Betriebsstoffverbrauch,
- hohe Betriebssicherheit.

So erwies sich der Dieselmotor aufgrund seiner relativ schnellen Betriebsbereitschaft, seiner raum- und Personal sparenden Bau- und Betriebsart und wegen des geringen spezifischen Kraftstoffverbrauchs als idealer Antrieb für kleinere Marineschiffe.

### II. Waterjet-Antrieb

Entsprechende Antriebssysteme werden insbesondere für schnelle seegehende Schiffe vorgesehen. Sie umfassen einen Antrieb durch wenigstens einen Wasserstrahl, den sogenannten "Waterjet", der in einem Pumpenaggregat mit Austrittsdüse(n) erzeugt wird. Hierzu kann ein Laufrad am Ende einer Pumpenwelle vorgesehen werden, die mit einem Motor wie etwa einem Elektromotor, beispielsweise mit Hoch-T_{c}-Supraleitern oder mit einem Dieselmotor oder einer Gasturbine verbunden ist (vgl. z.B. auch WO 03/101820 A1).

### III. Voll-elektrisches Schiff (VES)

Das elektrische Bordnetz von heutigen Schiffen setzt sich aus folgenden Komponenten und Systemen zusammen, nämlich aus
- elektrischer Energieerzeugung,
- elektrischer Energieverteilung und
- elektrischem Energieverbraucher.

Seit einigen Jahren wird die Realisierbarkeit von voll-elektrischen Marine-Überwasserschiffen untersucht. Das vollelektrische Schiff (VES) beinhaltet den Einsatz von wirtschaftlichen, elektrischen Energieerzeugern für den Antrieb des Schiffes durch elektrische Maschinen (Fahrnetz) und die Versorgung des Bordnetzes.

Kleinere Versuchsträger sind bereits seit einigen Jahren in Betrieb oder befinden sich derzeit in Bau. Die elektrischen Fahr- und Bordnetze sind zumeist in Niederspannung ausgeführt.

Als elektrische Energieerzeuger kommen folgende zukünftige Techniken in Betracht:
- Brennstoffzellentechnik
- Gasturbinen - Generator - Segmente
- Dieselmotor - Generator - Segmente

Der Leistungsbedarf der elektrischen Energie - Erzeugeraggregate liegt bei den zukünftigen Schiffen im Bereich von 20 - 50 MW je nach Anforderungen an das Bordnetz und an die Geschwindigkeit des Schiffes. Bei diesen Leistungen ist eine Verteilung der elektrischen Energie nur noch mit Mittelspannungssystem sinnvoll. Hier sind jedoch auch DC-Verteilungsnetze im Gespräch, da die Brennstoffzellentechnik von Haus aus eine Gleichspannung liefert.

Die angewandten Bordnetzspannungen für zukünftige Marine-Überwasserschiffe liegen im Niederspannungs- und im Mittelspannungsbereich. Die Bordnetzfrequenz beträgt 60 Hz (z. T. 50 Hz).

Insbesondere im Rahmen der Entwicklung voll-elektrischer Schiffe ist auch an Antriebe gedacht, die ihre wenigstens eine elektrische Antriebsmaschine an der Unterseite des Schiffskörpers gondelartig angebracht aufweisen. Solche Antriebe werden auch als "POD-Antriebe" bezeichnet. Entsprechende Antriebe, insbesondere mit Synchronmaschinen unter Verwendung von Hoch-T_{c}-Supraleitern, sind allgemein bekannt (vgl. z.B. WO 03/019759 A2, EP 0 907 556 B1, WO 03/047962 A2).

Oberstes Ziel der Gestaltung solcher POD-Antriebe ist zunächst die Gewichtsminimierung.

Weiterhin besteht das Ziel, einen hydrodynamischen Propellerwirkungsgrad von > 60 % zu erreichen. Das Verhältnis Gondeldurchmesser/Propellerdurchmesser ist für den POD-Antrieb dabei ein wichtiges Kriterium und sollte optimal bei 0,3...0,33 liegen (Verhältnisse unter 0,3 bringen nur noch geringfügige hydrodynamische Vorteile bei außergewöhnlich hohem Aufwand für den POD).

Die Länge der Gondel sollte dabei verhältnismäßig kurz sein.

Bekannte Permanentmagnet-Maschinen, konventionelle Asynchronund Synchronmaschinen erreichen die Anforderungen bezüglich dieser Voraussetzungen des Aspektverhältnisses und des Gewichtes nicht.

Aufgabe der vorliegenden Erfindung ist es nun, einen Schiffsantrieb unter Verwendung einer Synchronmaschine mit den eingangs genannten Merkmalen dahingehend anzugeben, bei dem eine sichere Kühlung der Rotor- und insbesondere der Statorwicklung mit vermindertem Aufwand ermöglicht wird, insbesondere auch bei geringer radialer Ausdehnung der Wicklung, wie es für Maschinen von Schiffen gefordert wird.

Diese Aufgabe wird mit den in Anspruch 1 angegebenen Maßnahmen gelöst. Dementsprechend soll bei der Synchronmaschine des Schiffsantriebs mit den eingangs genannten Merkmalen eine Kühlung deren Gehäuseteils wenigstens in Teilbereichen vorgesehen sein und soll eine thermische Ankopplung der Statorwicklung an das Kühlmedium (Wasser) über die Trägerstruktur und den Gehäuseteil erfolgen.

Die Tragzähne müssen deshalb zwangsläufig zumindest teilweise aus einem Material mit einer hierfür ausreichenden thermischen Leitfähigkeit bestehen.

Den erfindungsgemäßen Maßnahmen liegt die Überlegung zugrunde, dass die Statorwicklung der Synchronmaschine vorteilhaft über Wärmeleitung in ihren Tragzähnen praktisch vollständig zu entwärmen ist. Die Wärmeabfuhr erfolgt also aus der im Allgemeinen Cu-Leiter aufweisenden Statorwicklung über deren unumgängliche Isolation und die hierfür hinreichend wärmeleitenden Tragzähne unter Abgabe der Wärme an den umhüllenden Außenkörper. Dieser umhüllende Außenkörper besteht aus Gründen einer erforderlichen magnetischen Flussführung aus einem weichmagnetischen Material wie insbesondere Eisen, welches für eine ausreichende magnetischen Flussführung einen verhältnismäßig großen Querschnitt aufweisen muss und daher in der Lage ist, ausreichend Wärme aufzunehmen und abzugeben. Die Abgabe erfolgt von da aus zumindest über den ihm umhüllenden Gehäuseteil und gegebenenfalls über weitere Teile des Außengehäuses an ein ihn von außen her benetzendes Kühlmedium, vorzugsweise direkt oder indirekt an das Kühlmedium Wasser wie z.B. Meerwasser oder Frischwasser.

Besonders vorteilhaft ist auch, dass von den Wickelköpfen der Statorwicklung, welche wegen ihrer hochkomplizierten dreidimensionalen Geometrie im Allgemeinen nicht in die Trägerstruktur eingelegt werden können, die Wärmeabfuhr durch Wärmeleitung über die Cu-Leiter der Statorwicklung zum geraden Aktivteil der Wicklung (im Bereich des sie umhüllenden weichmagnetischen Außenkörpers) erfolgt. Von dort aus wird mittels der wärmeleitfähigen Tragzähne diese Wärme wie auch die Wärme aus dem geraden Aktivteil zu dem weichmagnetischen Außenkörper hin abgeführt, der über den Gehäuseteil von dem Kühlmedium entwärmt wird. Der Wärmetransport in das Kühlmedium erfolgt somit im Wesentlichen nur über die Tragzähne und den Außenkörper, die zusammen die Trägerstruktur bilden, sowie zumindest über den Gehäuseteil des Außengehäuses.

Demgegenüber reicht bei bekannten Maschinen der Querschnitt der vergleichsweise schlechter wärmeleitfähigen Tragzähne ihrer Trägerstruktur nicht aus, um eine äquivalente Entwärmung zu gewährleisten.

Vorteilhaft ist auch, dass auf Zusatzaggregate wie eine Zwangskühlung der Statorwicklung im Bereich der Tragzähne verzichtet werden kann.

Da es sich bei der Statorwicklung der Synchronmaschine bevorzugt um eine mehrpolige Wicklung vom Luftspalttyp handelt, die im Allgemeinen eine hohe Induktion der Rotorwicklung erfordert, ist letztere Wicklung vorteilhaft tief zu kühlen, wobei sie thermisch direkt oder indirekt an eine hierfür geeignete Rotorkühleinrichtung bzw. deren Kühlmittel angekoppelt ist. Vorzugsweise kann dabei die Rotorwicklung mit Supraleitern, insbesondere mit solchen, die Hoch-T_{c}-Supraleitermaterial enthalten, erstellt sein.

Bevorzugte Ausgestaltungen des erfindungsgemäßen Schiffsantriebs mit mindestens einer Synchronmaschine gehen aus den abhängigen Ansprüchen hervor.

So kann der Stator eine axiale Ausdehnung des Aktivteils seiner Statorwicklung aufweisen, die mindestens das Zweifache ihres Außendurchmessers, vorzugsweise mindestens das Vierfache und insbesondere mindestens das Sechsfache beträgt. Das bedeutet, dass die Statorwicklung nur eine geringe radiale Ausdehnung aufweist. Entsprechende Maschinentypen kommen vorzugsweise für Schiffsanwendungen (Waterjet- oder Propeller-/POD-Typ) in Frage. Aufgrund der geringen radialen Ausdehnung der Statorwicklung solcher Maschinen ist nämlich nur indirekt eine effektive Entwärmung wie gemäß der Erfindung realisierbar.

Für die Kühlung des Außengehäuses bzw. seines Gehäuseteils der Synchronmaschine kommen praktisch alle bekannten Kühlarten unter Verwendung von flüssigem Kühlmittel oder Kühlmittelgemischen in Frage. So kann eine Kühlung mittels einer Badkühlung vorgesehen sein. Stattdessen ist auch eine forcierte Strömung des Kühlmediums Wasser oder eines weiteren/ anderen, thermisch an das Kühlmedium Wasser angekoppelten Kühlmediums zumindest an oder in dem Gehäuseteil möglich. Dabei kann das verwendete Kühlmedium in diskreten Kühlkanälen, z.B. in an der Außenseite des Gehäuses angebrachten Kühlschlangen, strömen.

Ferner kann vorteilhaft mit dem Gehäuseteil ein weiteres, sich in einem eigenen Kühlsystem befindendes Kühlmedium verbunden sein, das thermisch an das Kühlmedium Wasser angekoppelt ist. Dabei kann für das Kühlmedium Wasser ein zusätzlicher Kühlkreislauf vorgesehen sein. Zwischen dem Kühlmedium Wasser und dem weiteren Kühlmedium der Maschine erfolgt dann in bekannter Weise ein Wärmeaustausch. Entsprechende Kühltechniken sind insbesondere für Schiffsanwendungen von Vorteil.

Außerdem ist es als vorteilhaft anzusehen, wenn die Rotorkühleinrichtung an das Kühlmedium Wasser der Statorkühleinrichtung thermisch angekoppelt ist. Dabei kann man insbesondere vorsehen:
- einen ersten Kühlkreislauf der Statorkühleinrichtung,
- einen zweiten Kühlkreislauf der Rotorkühleinrichtung und
- einen dritten Kühlkreislauf mit dem Kühlmedium Wasser, der thermisch direkt oder indirekt an den ersten und den zweiten Kühlkreislauf angekoppelt ist.

Auf diese Weise lässt sich eine effektive Nutzung des vorhandenen Wassers, sei es das Frisch- oder Brauchwasser des Schiffes oder das es umgebende Meerwasser, gewährleisten.

Erfindungsgemäß werden für die Trägerstruktur der Synchronmaschine des Schiffsantriebs keine Statorzähne aus Eisen wie bei bekannten Maschinen, sondern mit einem Material mit einer höheren thermischen Leitfähigkeit (Wärmeleitfähigkeit λ) eingesetzt. Die Wärmeleitfähigkeit von Eisen ist nämlich begrenzt und liegt im Bereich von 40 bis 60 W/(K·m) in Abhängigkeit von einer eventuellen Zulegierung weiterer Materialien.

Durch den Verzicht auf Tragzähne aus ferromagnetischem Eisen stellt dann die Statorwicklung praktisch eine Luftspaltwicklung dar, wobei über die Trägerstruktur für diese Wicklung die Verlustwärme aus der Luftspaltwicklung abgeführt wird. Hierbei spielt es keine Rolle, ob ein oder mehrere, z.B. elektrisch versetzte Statorsysteme als Luftspaltwicklung verwirklicht sind.

Weitere vorteilhafte Ausgestaltungen der erfindungsgemäßen Synchronmaschine gehen aus den vorstehend nicht angesprochenen Unteransprüchen hervor.

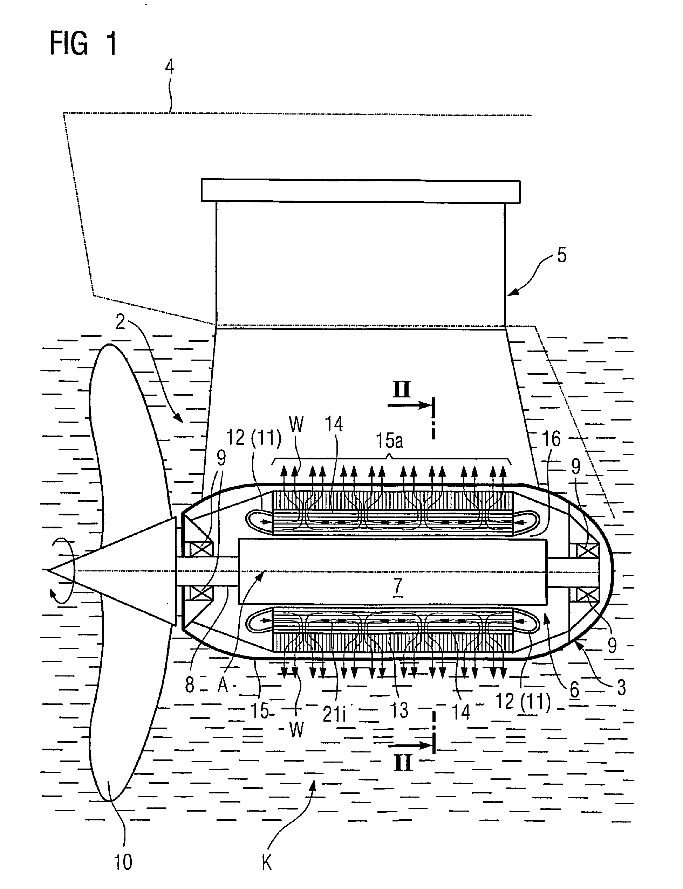

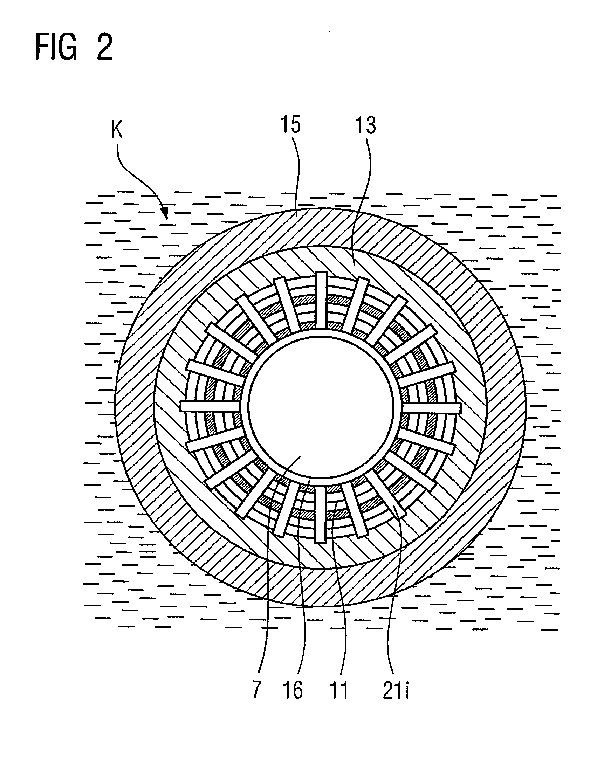

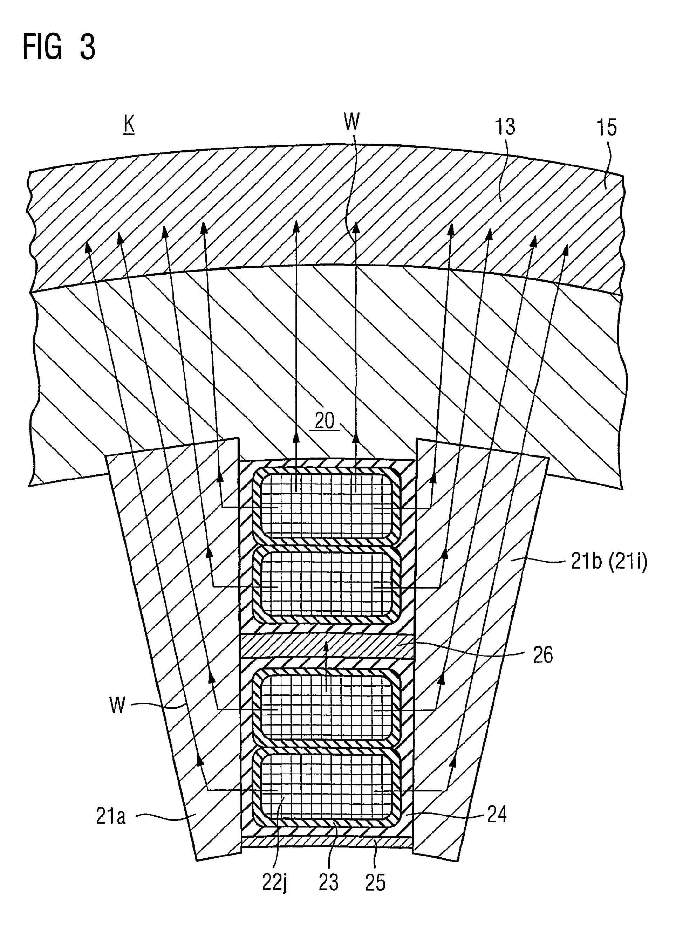

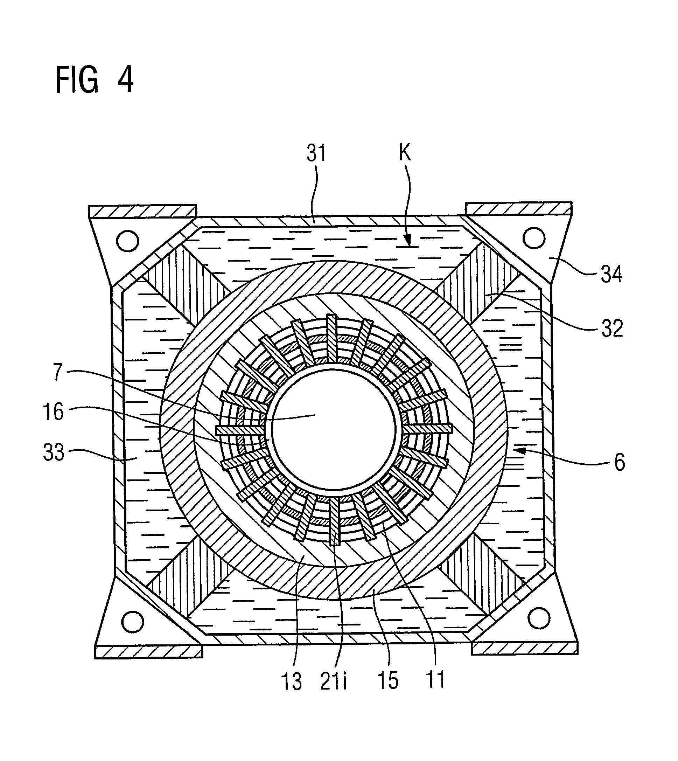

Zur weiteren Erläuterung der Erfindung wird nachfolgend auf die Zeichnung Bezug genommen, in der bevorzugte Ausführungsbeispiele von erfindungsgemäßen Synchronmaschinen angedeutet sind. Dabei zeigen jeweils in leicht schematisierter Form
- deren Figur 1: einen Längsschnitt durch einen POD-Propellerantrieb eines Schiffes mit einer solchen Maschine,
- deren Figur 2: einen Querschnitt durch die Maschine gemäß Figur 1,
- deren Figur 3: in einer Ausschnittsvergrößerung aus Figur 2 eine Statornut der Maschine sowie
- deren Figur 4: einen Querschnitt durch eine Waterjet-Maschine eines Schiffes.

Dabei sind in den Figuren sich entsprechende Teile jeweils mit denselben Bezugszeichen versehen.

Bei dem erfindungsgemäßen Schiffsantrieb mit wenigstens einer Synchronmaschine wird von an sich bekannten Antrieben ausgegangen. Es kann sich dabei insbesondere um einen Antrieb vom Propeller-/POD-Typ oder auch vom Waterjet-Typ handeln. Für das nachfolgende Ausführungsbeispiel sei ein Propeller-/POD-Typ angenommen. Dessen Synchronmaschine weist einen Rotor mit einer tiefzukühlenden, insbesondere supraleitenden mehrpoligen Rotorwicklung auf, die thermisch z.B. direkt an eine Rotorkühleinrichtung angekoppelt ist. Unter einer direkten Ankopplung sei dabei eine Kühlung mittels eines Kühlmediums verstanden, das in direktem Wärmekontakt mit den zu kühlenden Teilen der Rotorwicklung steht. Es ist jedoch auch eine indirekte Kühlung möglich, wobei zwischen den zu kühlenden Teilen der Rotorwicklung und einer Rotorkühleinrichtung oder einem Kühlmedium eine wärmeleitende Verbindung über feste Teile besteht. Den Rotor umschließt ein Stator mit einer zu kühlenden, normalleitenden Wicklung, wobei sich die Statorwicklung zumindest teilweise in einer Trägerstruktur befindet. Diese Trägerstruktur enthält einen hohlzylindrischen Außenkörper aus weichmagnetischem Material sowie an dessen Innenseite axial und radial verlaufende, stegartige Tragzähne, zwischen denen zumindest Teile der Statorwicklung angeordnet sind. Der weichmagnetische Außenkörper ist von einem Außengehäuse umschlossen, das im Bereich des Außenkörpers einen hohlzylindrischen Gehäuseteil bildet. Die in der Statorwicklung erzeugte Wärme wird über eine spezielle Statorkühleinrichtung an Wasser als Kühlmedium abgeführt. Auf diese Statorkühleinrichtung wird nachfolgend näher eingegangen.

Die Statorkühleinrichtung der Synchronmaschine ist besonders für solche Maschinentypen einsetzbar, die ein großes Aspektverhältnis der Statorwicklung aufweisen, d.h., wobei der Stator eine axiale Ausdehnung des Aktivteils seiner Statorwicklung aufweist, die ein Vielfaches des Außendurchmessers beträgt. Entsprechende Maschinentypen haben dann praktisch keinen Platz für diskrete Kühlkanäle im Bereich von Tragzähnen zwischen ihren Windungsteilen. Ein entsprechender Maschinentyp ist insbesondere der für das Ausführungsbeispiel der Figuren 1 bis 3 ausgewählte Propeller-/POD-Antrieb. Für nichterfindungsgemäße, in der Zeichnung nicht näher ausgeführte Details des Antriebs wird auf bekannte Ausführungsformen verwiesen (vgl. z.B. WO 03/019759 A2 oder EP 0 907 556 B1).

In der Figur sind bezeichnet mit 2 eine POD-Antriebseinheit eines Schiffes, mit 3 eine Motorgondel, mit 4 ein Rumpf eines Schiffes, mit 5 eine Haltevorrichtung für die Motorgondel an dem Schiffsrumpf, mit 6 eine Synchronmaschine, mit 7 ein Rotor dieser Maschine, mit 8 eine Rotorwelle, in Wellenlagern 9 gelagert ist, mit 10 ein an der Welle befestigter Schiffspropeller, mit 11 eine Luftspalt- und Drehstromwicklung als Statorwicklung, mit 12 Wickelköpfe dieser Wicklung, mit 13 ein weichmagnetisches Eisenjoch als Außenkörper einer Trägerstruktur 14, mit 15 ein Außengehäuse der Maschine mit einem den weichmagnetischen Außenkörper 13 umschließenden Gehäuseteil 15a, mit 16 ein zwischen der Luftspalt-/Statorwicklung 11 und der Außenseite des Rotors 7 vorhandener Luftspalt, mit A die Achse des Rotors 7 bzw. der Rotorwelle 8, mit W Wärmeströme und mit K ein Kühlmedium wie z.B. Wasser. Das Kühlmedium K soll sich dabei bevorzugt auf einer Ausgangstemperatur zwischen 275K und 310K, insbesondere zwischen 275K und 295K, befinden. In der gewählten Darstellung der Figur ist die Statorwicklung 11 weitgehend durch sich axial, d.h. in Richtung der Achse A erstreckende, stegartige Tragzähne 21i der Trägerstruktur 14 abgedeckt; nur ihre stirnseitigen Wickelköpfe 12 sind ersichtlich. Die angedeuteten Wärmeströme W verlaufen innerhalb der Wicklung 11 und in den Tragzähnen 21i.

Wie in der Figur durch die gepfeilten Linien der Wärmeströme W angedeutet sein soll, wird die in den elektrischen Leitern der Wicklung 11 hervorgerufene Wärme aus dem Wicklungsbereich zunächst in den sie in ihrem axialen Teil umschließenden weichmagnetischen Außenkörper 13 übertragen und von dort zumindest über den den Außenkörper umschließenden Gehäuseteil 15a an das Kühlmedium K abgegeben. Das Gehäuse ist insbesondere in diesem Bereich vorteilhaft aus einem gut-wärmeleitfähigen Material aufgebaut, dessen thermische Leitfähigkeit λ größer als die von Eisen ist und insbesondere über 60 W/(K·m) liegt. Hierfür besteht es vorteilhaft aus Metalllegierungen wie speziellen Bronzen, oder z.B. unter Zumischung oder - legierung von Werkstoffen wie von Aluminium (A1) oder Magnesium (Mg). So kann z.B. ein entsprechender Al-Guss bis zum 210/ (K·m) haben bzw. ein entsprechender Mg-Guss etwa 150 W/(K·m) aufweisen. Diese Materialien ermöglichen zugleich eine Leichtbauweise und können auch eine weitere Vergrößerung der wärmeaustauschenden Oberfläche gegenüber dem Kühlmedium K bilden.

Figur 2 zeigt den Querschnitt durch die Maschine 6 nach Figur 1 mit dem sie umschließenden Außengehäuse 15 bzw. dessen Gehäuseteil 15a. Die hier ersichtlichen einzelnen Tragzähne zwischen einzelnen Teilen der Statorwicklung 11 sind mit 21i bezeichnet. Sie bilden zusammen mit dem weichmagnetischen Außenkörper 13 die Trägerstruktur 14 für die Wicklung 11.

In Figur 3 ist eine Ausschnittsvergrößerung aus der Figur 2 im Bereich einer Statornut 20 veranschaulicht. In der Figur sind ferner bezeichnet mit 21a und 21b zwei der die Statornut in Umfangsrichtung seitlich begrenzenden Tragzähne 21i, mit 22j Wicklungsleiter oder ein -paket, beispielsweise Cu-Leiter, der Statorwicklung 11, mit 23 eine Leiterisolation um die einzelnen Leiter 22j, mit 24 eine Hauptisolation, mit 25 ein Halteschieber am Boden der Nut 20 und mit 26 ein Zwischenschieber in einem mittleren Bereich der Nut, z.B. gemäß der DE 102 27 559 A1. Dabei spielt es keine Rolle, wie viel Leitermaterial im Stator parallelgeschaltet ist oder wie viele Statorsysteme insgesamt zur Anwendung kommen. Wichtigster Wärmewiderstand ist die Leiterisolation der Wicklungsleiter 22j sowie die Hauptisolation 24 zwischen dem Leiterpaket und den seitlichen Tragzähnen 21a und 21b. Über diese Isolationen gelangt die von den Leitern 22j hervorgerufene Wärme zu den vorteilhaft gut-wärmeleitend ausgebildeten Tragzähnen 21a und 21b und von dort über den die Nut nach außen hin umgebenden weichmagnetischen Außenkörper 13 und den Gehäuseteil 15a des Außengehäuses 15 an das Kühlmedium K. Dabei wird es als günstig erachtet, wenn auch der Zwischenschieber 26 aus einem gut-wärmeleitfähigen, aber elektrisch schlecht leitenden Material hergestellt wird wie z.B. aus einem Aluminiumoxid, Aluminiumnitrid oder einer anderen gut-wärmeleitenden Keramik.

Bei der Synchronmaschine der Antriebseinrichtung nach der Erfindung haben die Tragzähne 21a, 21b (bzw. 21i) drei Funktionen, nämlich
- Übertragung der mechanischen Momente,
- Halterung und Beabstandung der Wicklungsleiter 22j sowie
- die thermische Funktion der Wärmeabfuhr/-übertragung.

Als Material für die Tragzähne kommt insbesondere eine der vorgenannten, gut-wärmeleitfähigen Keramiken oder Metalllegierungen oder aber ein Verbundwerkstoff, insbesondere mit Carbonfasern höchster Wärmeleitfähigkeit, z.B. ein CFK-Verbundwerkstoff (carbonfaser-verstärkter Kunststoff), in Frage. Hierbei ist es besonders vorteilhaft, die Faserrichtung so auszulegen, dass ein optimaler Wärmestrom erfolgen kann. Beispielsweise haben die Tragzähne keilförmige Gestalt. Dabei ist es unerheblich, welche konkrete Ausführungsform und Gestalt ein einzelner Tragzahn hat, z.B. ob er einstückig aus einem einheitlichen Material oder mehrgeteilt aus verschiedenen Materialien oder aus einem Sandwichmaterial oder einem Verbundwerkstoff hergestellt ist. Es muss jedoch auf alle Fälle sichergestellt sein, dass der geforderte Wärmestrom W in ausreichender Intensität in der gezeigten Weise abgeleitet werden kann.

Bei der Ausführungsform eines POD-Antriebs eines Schiffes gemäß den vorstehenden Figuren 1 bis 3 wurde davon ausgegangen, dass das Außengehäuse 15 mit dem Gehäuseteil 15a unmittelbar von Meerwasser als Kühlmedium K von seiner Außenseite her umspült ist. Selbstverständlich ist die Maschine auch für andere Kühlkreisläufe unter Verwendung des Kühlmediums K ebenso gut geeignet. So kann das den Gehäuseteil kühlende Kühlmedium ein weiteres, von Wasser verschiedenes Kühlmedium sein, das sich in einem eigenen Kühlsystem befindet, wobei dieses Kühlsystem bzw. das weitere Kühlmedium thermisch direkt oder indirekt an das Kühlmedium K, z.B. Frischwasser des Schiffes oder Meerwasser, angekoppelt ist. Es ist auch möglich, dass für dieses weitere Kühlmedium der Maschine ein zusätzlicher Kühlkreislauf vorgesehen wird, wobei dann ein Wärmeaustausch zwischen diesem zusätzlichen Kühlkreislauf und dem Kühlmedium Wasser erfolgt.

Das die Maschine zumindest im Bereich des Gehäuseteils 15a kühlende Kühlmedium kann sich in einem Behälter eines Kühlmittelbades befinden oder auch forciert an dem Außengehäuse vorbeiströmen. Eine solche Strömung kann auch in diskreten Kühlmittelkanälen erfolgen, die zumindest in oder an dem Gehäuseteil angeordnet sind. Beispielsweise können entsprechende Kühlmittelschlangen an der Außenseite des Gehäuseteils in gut-wärmeleitender Verbindung mit diesem angebracht sein.

Bevorzugt wird mittels einer solchen direkten oder indirekten Kühlung unter Verwendung des Kühlmediums Wasser, das im Allgemeinen eine Ausgangstemperatur zwischen 275K und 310K, vorzugsweise zwischen 275K und 295K, aufweist, eine Betriebstemperatur der Statorwicklung 11 zwischen 275K und 525K, vorzugsweise zwischen 275K und 455K, eingestellt.

Eine indirekte Kühltechnik ist für die aus Figur 4 ersichtliche Synchronmaschine 6 vorgesehen. Die Figur zeigt eine Ausführungsform der Maschine gemäß den Figuren 1 bis 3, die innerhalb eines Behältergehäuses 31 über Tragstreben 32 gehalten ist. In einem oder mehreren Zwischenräumen 33 zwischen dem Behältergehäuse und dem Außengehäuse 15 der Maschine 6 befindet sich dabei das Kühlmedium K. Die gezeigte Ausführungsform kann insbesondere für Waterjet-Antriebe von Schiffen verwendet werden, bei der sich der eigentliche Motor in einem Maschinengehäuse im Schiffszwischenrumpf befindet. Zur Installation und Befestigung des Behältergehäuses 31 an einem Fundament sind außen an dem Behältergehäuse angreifende Pratzen 34 angedeutet. Die Tragstreben 32 übertragen hier das Drehmoment von der Maschine bzw. deren Außengehäuse auf das Behältergehäuse 31 und über die daran angeordneten Pratzen 34 auf das Fundament, im Beispiel den Schiffszwischenrumpf.

Das zwischen dem Behältergehäuse 31 und dem Maschinengehäuse 15 befindliche Kühlmedium K ist bevorzugt eine Flüssigkeit oder ein Flüssigkeitsgemisch. Das Kühlmedium ist an einen Kühlkreislauf angebunden, z.B. direkt oder indirekt an das Frischwassersystem eines Schiffes. Hierzu können gegebenenfalls Pumpen eingesetzt werden. Es ist auch ein separater Wasserkreislauf denkbar, der mittels Wärmetauscher an das Meerwasser kühlt. Dieser separate Wärmekreislauf kann Natur- oder Zwangsumlauf haben. Bei einem Naturumlauf müssen entsprechend große Querschnitte realisiert sein. Der Naturumlauf kann beispielsweise aufgrund eines Thermosyphon-Effektes erfolgen, bei dem ein den Temperaturen angepasstes Kühlmedium, gegebenenfalls Wasser, verwendet wird.

Bei den vorstehenden Ausführungsformen wurde davon ausgegangen, dass es sich bei dem für die Synchronmaschine verwendeten Maschinentyp um einen Motor mit einem Rotor handelt, der eine mehrpolige Rotorwicklung insbesondere mit Hoch-T_{c}-Supraleitermaterial aufweist (z.B. gemäß der WO 03/047962 A2). Dabei ist die Rotorwicklung mittels der Rotorkühleinrichtung im Allgemeinen auf einer Betriebstemperatur zwischen 4K und 120 K, vorzugsweise zwischen 25K und 77K, insbesondere zwischen 25K und 35K, zu halten. Eine entsprechende Maschine kann direkt als ein Antriebsmotor oder auch als ein Generator für einen Schiffsantrieb vorgesehen sein (vgl. die vorgenannte WO-A2-Schrift). Selbstverständlich lässt sich eine solche Maschine auch mit Leitern unter Verwendung von klassischem, metallischem Supraleitermaterial oder auch mit normalleitenden, gekühlten Leitern aufbauen.

Die vorstehend beschriebene Kühleinrichtung für die Statorwicklung 11 lässt sich vorteilhaft mit einer für die Kühlung der Rotorwicklung erforderlichen Kühleinrichtung kombinieren. Da im Allgemeinen die Betriebstemperatur der Rotorwicklung unter der für die Statorwicklung liegt, kann das für die Kühlung der Statorwicklung verwendete Kühlmedium Wasser praktisch nur zu einer Vorkühlung der Rotorkühleinrichtung herangezogen werden. Man sieht deshalb zweckmäßig einen ersten Kühlkreislauf für die Statorkühleinrichtung und einen zweiten Kühlkreislauf für die Rotorkühleinrichtung vor. Das in einem dritten Kühlkreislauf geführte Kühlmedium Wasser wird dann thermisch direkt oder indirekt an den ersten und den zweiten Kühlkreislauf angekoppelt. Gegebenenfalls ist es auch möglich, den Wasserkühlkreislauf in den ersten Kühlkreislauf der Statorkühleinrichtung zu integrieren.

Nachfolgend sei auf einige Gesichtspunkte für die Auslegung eines Waterjet-Antrieb unter Verwendung einer HTS-Synchronmaschine eingegangen.

Die Zielsetzung ist hier im Gegensatz zum POD-Motor anders: Der Antriebsmotor soll im Schiffszwischenboden installiert werden. Priorität hat hier die Optimierung des Durchmessers des Aktivteiles.
Die Länge des Aktivteils ist eher nicht so wichtig.
Ein hohes Gewicht ist eher erwünscht.
Der elektrische Wirkungsgrad sollte hoch sein.

Die Länge der Welle des Waterjet-Antriebes hängt einerseits von der Neigung gegenüber dem Schiffsrumpf, andererseits von der Bauhöhe des Antriebsmotors ab.

## Patentansprüche

1. Schiffsantrieb mit einer Synchronmaschine (6), welche
a) einen Rotor (7) enthält mit einer tiefzukühlenden, insbesondere supraleitenden mehrpoligen Rotorwicklung, die thermisch direkt oder indirekt an eine Rotorkühleinrichtung angekoppelt ist,
sowie
b) einen den Rotor (7) unter Ausbildung eines Luftspaltes (16) umschließenden Stator aufweist mit
• einer zu kühlenden, normalleitenden Statorwicklung (11),
• einer die Statorwicklung (11) zumindest teilweise aufnehmenden Trägerstruktur (14), welche einen im Wesentlichen hohlzylindrischen Außenkörper (13) aus weichmagnetischem Material aufweist,
• einem Außengehäuse (15) mit einem den Außenkörper (13) direkt umschließenden, hohlzylindrischen Gehäuseteil (15a),
und
einer Statorkühleinrichtung zur Abführung der von der Statorwicklung (11) erzeugten Wärme (W) an Wasser als ein Kühlmedium (K), wobei eine Kühlung des Gehäuseteils (15a) wenigstens in Teilbereichen durch Wärmeaustausch mit dem Kühlmedium (K) in oder an dem Gehäuseteil (15a) vorgesehen ist,
**dadurch gekennzeichnet, dass**
- eine thermische Ankopplung der Statorwicklung (11) an das Kühlmedium (K) über die Trägerstruktur (14) und den Gehäuseteil (15a) erfolgt,
- die Trägerstruktur (14) an der Innenseite des hohlzylindrischen Außenkörpers (13) axial und radial verlaufende, stegartige Tragzähne (21i) umfasst, zwischen denen zumindest Teile der Statorwicklung (11) angeordnet sind,
- die Abführung der von der Statorwicklung (11) erzeugten Wärme praktisch vollständig über die Wärmeleitung in den Tragzähnen (21i) erfolgt,
- die Tragzähne (21i) aus einem Material ausgebildet sind, das eine thermische Leitfähigkeit von über 60 W/(K·m) besitzt.

2. Schiffsantrieb nach Anspruch 1, **gekennzeichnet durch** eine Kühlung des Gehäuseteils (15a) von seiner Außenseite her.

3. Schiffsantrieb nach Anspruch 1 oder 2, **dadurch gekennzeichnet, dass** eine Kühlung mittels einer Badkühlung vorgesehen ist.

4. Schiffsantrieb nach Anspruch 1 oder 2, **gekennzeichnet durch** eine forcierte Strömung des Kühlmediums (K) Wasser oder eines weiteren thermisch an das Kühlmedium Wasser angekoppelten Kühlmediums.

5. Schiffsantrieb nach Anspruch 4, **dadurch gekennzeichnet, dass** die Strömung in Kühlkanälen vorgesehen ist.

6. Schiffsantrieb nach einem der vorangehenden Ansprüche, **dadurch gekennzeichnet, dass** mit dem Gehäuseteil (15a) ein weiteres, sich in einem eigenen Kühlsystem befindendes Kühlmedium verbunden ist.

7. Schiffsantrieb nach Anspruch 6, **dadurch gekennzeichnet, dass** für das Kühlmedium Wasser ein zusätzlicher Kühlkreislauf vorgesehen ist.

8. Schiffsantrieb nach einem der vorangehenden Ansprüche, **dadurch gekennzeichnet, dass** das Kühlmedium Wasser von dem Schiff mitgeführtes Wasser oder dem Meer entnommenes Wasser ist.

9. Schiffsantrieb nach einem der vorangehenden Ansprüche, **gekennzeichnet durch** eine Ausgangstemperatur des Kühlmediums Wasser zwischen 275K und 310K, vorzugsweise zwischen 275K und 295K.

10. Schiffsantrieb nach einem der vorangehenden Ansprüche, **gekennzeichnet durch** eine Kühlung der Statorwicklung (11) mittels der Statorkühleinrichtung auf eine Betriebstemperatur zwischen 275K und 525K, vorzugsweise zwischen 275K und 455K.

11. Schiffsantrieb nach einem der vorangehenden Ansprüche, **dadurch gekennzeichnet, dass** die Rotorwicklung mit Hoch-T_{c}-Supraleitern erstellt ist.

12. Schiffsantrieb nach Anspruch 11, **gekennzeichnet durch** eine Kühlung der Rotorwicklung mittels der Rotorkühleinrichtung auf eine Betriebstemperatur zwischen 4K und 120 K, vorzugsweise zwischen 25K und 77K, insbesondere zwischen 25K und 35K.

13. Schiffsantrieb nach einem der vorangehenden Ansprüche, **dadurch gekennzeichnet, dass** die Rotorkühleinrichtung thermisch an das Kühlmedium Wasser der Statorkühleinrichtung angekoppelt ist.

14. Schiffsantrieb nach Anspruch 13, **gekennzeichnet durch**
• einen ersten Kühlkreislauf der Statorkühleinrichtung,
• eine zweiten Kühlkreislauf der Rotorkühleinrichtung und
• einen dritten Kühlkreislauf mit dem Kühlmedium Wasser, der thermisch direkt oder indirekt an den ersten und den zweiten Kühlkreislauf angekoppelt ist.

15. Schiffsantrieb nach einem der vorangehenden Ansprüche, **dadurch gekennzeichnet, dass** der Stator eine axiale Ausdehnung des Aktivteils seiner Statorwicklung (11) aufweist, die mindestens das Zweifache ihres Außendurchmessers, vorzugsweise mindestens das Vierfache, insbesondere mindestens das Sechsfache, beträgt.

16. Schiffsantrieb nach einem der vorangehenden Ansprüche, **dadurch gekennzeichnet, dass** die Tragzähne (21i) zumindest teilweise aus einer Metalllegierung oder einer Keramik oder einem Verbundwerkstoff bestehen.

17. Schiffsantrieb nach einem der vorangehenden Ansprüche, **dadurch gekennzeichnet, dass** der Gehäuseteil (15a) zumindest teilweise aus einem Material mit einer größeren thermischen Leitfähigkeit λ als der von Eisen besteht.

18. Schiffsantrieb nach einem der vorangehenden Ansprüche, **dadurch gekennzeichnet, dass** der Gehäuseteil (15a) aus einem Material mit einer thermischen Leitfähigkeit λ von über 60 W/(K·m) besteht.

19. Schiffsantrieb nach Anspruch 18, **dadurch gekennzeichnet, dass** als Material eine Metalllegierung oder eine Keramik oder ein Verbundwerkstoff vorgesehen ist.

## Claims

1. Ship propulsion system comprising a synchronous machine (6) which
a) contains a rotor (7) having an in particular superconducting multipole rotor winding which requires deep cooling and which is thermally coupled directly or indirectly to a rotor cooling device,
and also
b) has a stator enclosing the rotor (7) while forming an air gap (16), comprising
• a normally conducting stator winding (11) requiring cooling,
• a carrier structure (14) which at least partially accommodates the stator winding (11) and has a substantially hollow cylindrical outer body (13) made of soft-magnetic material,
• an outer housing (15) having a hollow cylindrical housing part (15a) directly enclosing the outer body (13),
and
a stator cooling device for dissipating the heat (W) generated by the stator winding (11) to water as a cooling medium (K), wherein cooling of the housing part (15a) is provided at least in subsections through heat exchange with the cooling medium (K) in or on the housing part (15a),
**characterised in that**
- the stator winding (11) is thermally coupled to the cooling medium (K) by way of the carrier structure (14) and the housing part (15a),
- on the inside of the hollow cylindrical outer body (13) the carrier structure (14) comprises axially and radially extending fin-shaped carrier teeth (21i) between which at least parts of the stator winding (11) are arranged,
- the heat generated by the stator winding (11) is dissipated practically completely by way of the thermal conduction provided in the carrier teeth (21i),
- the carrier teeth (21i) are embodied from a material which possesses a thermal conductivity of greater than 60 W/(K·m).

2. Ship propulsion system according to claim 1, **characterised by** cooling of the housing part (15a) from its outside.

3. Ship propulsion system according to claim 1 or 2, **characterised in that** cooling is provided by means of immersion in a cooling bath.

4. Ship propulsion system according to claim 1 or 2, **characterised by** a forced flow of the cooling medium (K) water or another cooling medium thermally coupled to the cooling medium water.

5. Ship propulsion system according to claim 4, **characterised in that** the flow is provided in cooling channels.

6. Ship propulsion system according to one of the preceding claims, **characterised in that** a further cooling medium contained in a separate cooling system is connected to the housing part (15a).

7. Ship propulsion system according to claim 6, **characterised in that** an additional cooling circuit is provided for the cooling medium water.

8. Ship propulsion system according to one of the preceding claims, **characterised in that** the cooling medium water is water carried by the ship or water taken from the sea.

9. Ship propulsion system according to one of the preceding claims, **characterised by** an initial temperature of the cooling medium water between 275K and 310K, preferably between 275K and 295K.

10. Ship propulsion system according to one of the preceding claims, **characterised by** cooling of the stator winding (11) by means of the stator cooling device to an operating temperature between 275K and 525K, preferably between 275K and 455K.

11. Ship propulsion system according to one of the preceding claims, **characterised in that** the rotor winding is produced by means of high-T_{c} superconductors.

12. Ship propulsion system according to claim 11, **characterised by** cooling of the rotor winding by means of the rotor cooling device to an operating temperature between 4K and 120K, preferably between 25K and 77K, in particular between 25K and 35K.

13. Ship propulsion system according to one of the preceding claims, **characterised in that** the rotor cooling device is thermally coupled to the cooling medium water of the stator cooling device.

14. Ship propulsion system according to claim 13, **characterised by**
• a first cooling circuit of the stator cooling device,
• a second cooling circuit of the stator cooling device and
• a third cooling circuit containing the cooling medium water and thermally coupled directly or indirectly to the first and the second cooling circuit.

15. Ship propulsion system according to one of the preceding claims, **characterised in that** the stator has an axial extension of the active part of its stator winding (11) which is equal to at least twice, preferably at least four times, in particular at least six times, its outer diameter.

16. Ship propulsion system according to one of the preceding claims, **characterised in that** the carrier teeth (21i) at least partially consist of a metal alloy or of a ceramic or of a composite material.

17. Ship propulsion system according to one of the preceding claims, **characterised in that** the housing part (15a) at least partially consists of a material having a greater thermal conductivity λ than that of iron.

18. Ship propulsion system according to one of the preceding claims, **characterised in that** the housing part (15a) consists of a material having a thermal conductivity λ of greater than 60 W/(K·m).

19. Ship propulsion system according to claim 18, **characterised in that** a metal alloy or a ceramic or a composite material is provided as material.

## Revendications

1. Propulsion de navire comprenant un moteur ( 6 ) synchrone qui
a) comporte un rotor ( 7 ) ayant un enroulement rotorique multipolaire réfrigéré, notamment supraconducteur, qui est couplé thermiquement directement ou indirectement avec un dispositif de refroidissement du rotor,
ainsi que
b) ayant un stator entourant le rotor ( 16 ) en formant un entrefer ( 16 ) et ayant
• un enroulement ( 11 ) statorique à refroidir à conduction normale,
• une structure ( 14 ) de support, qui reçoit au moins en partie l'enroulement ( 11 ) statorique et qui a un corps ( 13 ) extérieur sensiblement cylindrique creux en un matériau à magnétisme doux,
• un carter ( 15 ) extérieur ayant une partie ( 15a ) de carter cylindrique creux entourant directement le corps ( 13 ) extérieur,
et
un dispositif de refroidissement du stator pour évacuer de la chaleur ( W ) produite par l'enroulement ( 11 ) statorique sur de l'eau comme fluide ( K ) de refroidissement, un refroidissement de la partie ( 15a ) de carter étant prévu au moins dans des zones partielles par échange de chaleur avec le fluide ( K ) de refroidissement dans ou sur la partie ( 15a ) de carter,
**caractérisé en ce que**
- un couplage thermique de l'enroulement ( 11 ) statorique au fluide ( K ) de refroidissement s'effectue par la structure ( 14 ) de support et par la partie ( 15a ) de carter,
- la structure ( 14 ) de support comprend du côté intérieur du corps ( 13 ) extérieur cylindrique creux des dents ( 21i ) de support en forme de nervure, s'étendant axialement et radialement et entre lesquelles sont disposées au moins des parties de l'enroulement ( 11 ) statoriques,
- l'évacuation de la chaleur produite par l'enroulement ( 11 ) statorique s'effectue entièrement par la conduction calorifique dans les dents ( 21i ) de support,
- les dents ( 21i ) de support sont en un matériau qui a une conductibilité thermique de plus de 60 W/( K.m ).

2. Propulsion de navire suivant la revendication 1, **caractérisée par** un refroidissement de la partie ( 15a ) de carter par son côté extérieur.

3. Propulsion de navire suivant la revendication 1 ou 2, **caractérisée en ce qu'**il est prévu un refroidissement au moyen d'un refroidissement par bain.

4. Propulsion de navire suivant la revendication 1 ou 2, **caractérisée par** un courant forcé du fluide ( K ) de refroidissement eau ou d'un autre fluide de refroidissement couplé thermiquement au fluide de refroidissement eau.

5. Propulsion de navire suivant la revendication 4, **caractérisée en ce que** le courant est prévu dans des canaux de refroidissement.

6. Propulsion de navire suivant l'une des revendications précédentes, **caractérisée en ce qu'**un autre fluide de refroidissement se trouvant dans son propre système de refroidissement est relié à la partie ( 15a ) de carter.

7. Propulsion de navire suivant la revendication 6, **caractérisée en ce qu'**un circuit de refroidissement supplémentaire est prévu pour le fluide de refroidissement eau.

8. Propulsion de navire suivant l'une des revendications précédentes, **caractérisée en ce que** le fluide de refroidissement eau est de l'eau embarquée sur le navire ou de l'eau prise dans la mer.

9. Propulsion de navire suivant l'une des revendications précédentes, **caractérisée par** une température initiale du fluide de refroidissement eau comprise entre 275K et 310K, de préférence entre 275K et 295K.

10. Propulsion de navire suivant l'une des revendications précédentes, **caractérisée par** un refroidissement de l'enroulement ( 11 ) statorique au moyen du dispositif de refroidissement du stator jusqu'à une température de fonctionnement comprise entre 275K et 525K, de préférence entre 275K et 455K.

11. Propulsion de navire suivant l'une des revendications précédentes, **caractérisée en ce que** l'enroulement rotorique est établi avec des supraconducteurs à Tc haute.

12. Propulsion de navire suivant la revendication 1, **caractérisée par** un refroidissement de l'enroulement rotorique au moyen du dispositif de refroidissement du rotor jusqu'à une température du fonctionnement comprise entre 4K et 120K, de préférence entre 25K et 77K, notamment entre 25K et 35K.

13. Propulsion de navire suivant l'une des revendications précédentes, **caractérisée en ce que** le dispositif de refroidissement rotorique est couplé thermiquement au fluide de refroidissement eau du dispositif de refroidissement du stator.

14. Propulsion de navire suivant la revendication 13, **caractérisée par**
• un premier circuit de refroidissement du dispositif de refroidissement du stator,
• un deuxième circuit de refroidissement du dispositif de refroidissement du rotor et
• un troisième circuit de refroidissement par le fluide de refroidissement eau, qui est couplé thermiquement directement ou indirectement avec le premier et avec le deuxième circuits de refroidissement.

15. Propulsion de navire suivant l'une des revendications précédentes, **caractérisée en ce que** le stator a une étendue axiale de la partie active de son enroulement ( 11 ) statorique qui représente au moins deux fois son diamètre extérieur, de préférence au moins quatre fois, notamment au moins six fois.

16. Propulsion de navire suivant l'une des revendications précédentes, **caractérisée en ce que** les dents ( 21i ) de support sont au moins en partie en un alliage métallique ou en une céramique ou en un matériau composite.

17. Propulsion de navire suivant l'une des revendications précédentes, **caractérisée en ce que** la partie ( 15a ) de carter est au moins en partie en un matériau ayant une conductibilité λ thermique plus grande que celle du fer.

18. Propulsion de navire suivant l'une des revendications précédentes, **caractérisée en ce que** la partie ( 15a ) de carter est en un matériau ayant une conductibilité λ thermique supérieure à 60W/( K.m ).

19. Propulsion de navire suivant la revendication 18, **caractérisée en ce qu'**il est prévu comme matériau un alliage métallique ou une céramique ou un matériau composite.
